# FASCICULE DE BREVET EUROPEEN

(11) **EP 2 373 504 B1**
(45) Date de publication et mention de la délivrance du brevet: **31.10.2012**
(21) Numéro de dépôt: 09763954.6
(22) Date de dépôt: 02.12.2009
(51) Int. Cl.: B60C 11/12

(54) **BANDE DE ROULEMENT COMPORTANT DES PLOTS**
LAUFFLÄCHE MIT BLÖCKEN
TREAD WITH BLOCKS

(30) Priorité: 05.12.2008 FR 0858302
(43) Date de publication de la demande: 12.10.2011
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: LHOSPITALIER, Sylvie, F-63720 Ennezat (FR)
(74) Mandataire: Diernaz, Christian
(86) Numéro de dépôt international: PCT/EP2009/066216
(87) Numéro de publication internationale: WO 2010/063753

(56) Documents cités:
- EP-A- 0 664 230
- EP-A- 0 968 848
- DE-A1- 4 426 950
- JP-A- 11 165 507
- JP-A- 63 291 704
- JP-A- 63 297 107

## Description

L'invention concerne les bandes de roulement pour pneu et en particulier une sculpture pour de telles bandes comportant une nouvelle géométrie d'incision conférant auxdites bandes une amélioration des performances en adhérence sur sol revêtu d'eau sans pour autant diminuer la durée de vie sur usure.

L'invention concerne les bandes de roulement destinées à la fabrication de pneus neufs ou au rechapage de pneus, et en particulier les sculptures pour lesdites bandes comportant un grand nombre de découpures se présentant sous la forme de rainures et/ou d'incisions. Par incision, on entend, dans la présente description, une découpure de largeur quasi-nulle et en tout état de cause inférieure ou égale à 2 mm, tandis qu'une rainure est une découpure de largeur supérieure à 2 mm.

Il est connu de la demande de brevet JP 2003104012-A1 pour obtenir une bonne adhérence sur sol mouillé, de réaliser une incision dont la trace sur la surface de roulement est de forme carrée et fermée dans des blocs de gomme d'une bande de roulement, ayant la même profondeur que les rainures délimitant lesdits blocs.

Il est en outre connu, par exemple dans les brevets US 2100084, US 2339558, de réaliser des incisions dont la trace sur la surface de roulement de la bande de roulement est de forme circulaire fermée de diamètre constant permettant d'avoir des arêtes efficaces dans toutes les directions tangentes à la surface de roulement. Chacune de ces incisions délimite et isole un plot de gomme (dont la section transversale a des dimensions relativement petites devant la largeur de la bande de roulement) uniquement relié à la bande par sa base, c'est-à-dire la partie du plot la plus éloignée de la surface de roulement. Ce plot de gomme est comprimé lors du contact avec le sol et en outre soumis à des forces agissant tangentiellement à la surface de contact avec le sol pendant le roulage, ces dernières forces ayant tendance à le déformer à la fois en cisaillement et en flexion. Ce plot de gomme est légèrement incliné par rapport à la perpendiculaire à la surface de roulement ce qui provoque, en raison de la flexion du plot, une ouverture de l'incision qui le délimite.

Le brevet DE 4107547-C2 décrit une bande de roulement qui comporte une incision dont la trace sur la surface de roulement est circulaire et fermée, de diamètre constant dans la profondeur et qui est inclinée, par rapport à une perpendiculaire à la surface de roulement, sur une partie de sa hauteur selon un angle pouvant aller de 20° à 60° puis selon un angle plus faible pouvant aller jusqu'à 20° sur la partie la plus éloignée de la surface de roulement. Cette incision délimite un plot de matière. Le changement d'inclinaison de l'incision circulaire intervient à environ un tiers de la profondeur des rainures dont est pourvue la bande de roulement.

La demande de brevet DE 4426950-A1 décrit une bande de roulement qui comporte des incisions de forme circulaire fermée et de diamètre constant, chacune de ces incisions délimite et isole un plot dont la surface est inclinée par rapport à une perpendiculaire à la surface de roulement, cette surface étant décalée radialement vers l'intérieur de la surface de roulement pour éviter l'arrachement du plot au cours de la vie du pneu muni d'une telle bande de roulement.

Le brevet EP 0664230-B1 décrit une bande de roulement qui comporte des incisions dont la trace sur la surface de roulement est par exemple de forme circulaire fermée, chacune de ces incisions délimite et isole un plot de gomme dont le périmètre mesuré sur toute surface parallèle à la surface de roulement est continuellement croissant sur au moins une partie de sa hauteur puis est décroissant tout en restant supérieur au périmètre du plot au niveau de la surface de roulement afin de réduire les problèmes lors du démoulage et de réduire le risque de voir la surface des plots venir en saillie par rapport à la surface de roulement.

Les solutions de l'état de la technique décrites ci-dessus concernent toutes des incisions qui ne sont pas bloquantes, c'est-à-dire des incisions dont les parois les délimitant ne comportent pas de moyens réduisant ou annulant les déplacements relatifs d'une paroi par rapport à la paroi en vis-à-vis. Il en résulte que les déformations du plot se traduisent par des pertes hystérétiques qui conduisent à une résistance au roulement augmentée et par des usures irrégulières, notamment autour des plots. Par usure irrégulière, on entend ici des usures qui ne sont pas uniformes sur toute la surface de roulement, c'est-à-dire des usures qui sont localement plus fortes que sur l'ensemble de la bande.

Par durée de vie d'une bande de roulement d'un pneu, il faut entendre la durée d'utilisation de ladite bande avant que l'usure n'atteigne un niveau limite d'usure impliquant un retrait du pneu pour remplacement ou pour rechapage.

Un des objectifs de l'invention est de proposer une bande de roulement pourvue d'une pluralité de plots de gomme délimités par des incisions bloquantes et dont la résistance au roulement et la résistance aux usures irrégulières est améliorée par rapport aux bandes de roulement de l'état de la technique, sans pour autant diminuer la durée de vie sur usure et dont le démoulage est facilité et ne génère pas la mise en saillie des plots par rapport à la surface de roulement à l'état neuf.

Cet objectif est atteint grâce à une bande de roulement pour pneu ayant une épaisseur E et pourvue d'une surface de roulement destinée à venir en contact avec la chaussée pendant le roulage, cette bande de roulement comportant une pluralité de plots de gomme d'axe moyen XX' coupant la surface de roulement de la bande. Chaque plot de gomme a une hauteur H au plus égale à l'épaisseur E de la bande et comprend une paroi latérale faisant le tour dudit plot autour de l'axe moyen XX', cette paroi latérale coupant la surface de roulement selon une arête dont le tracé sur la surface de roulement est fermé, cette arête délimitant une face de contact du plot avec la chaussée. Chaque plot comprend une base située à la distance H de la face de contact dudit plot avec la chaussée.

La paroi latérale de chaque plot est reliée à sa base à l'intérieur de la bande par une partie de raccordement à une paroi en vis-à-vis, lesdites paroi latérale et paroi en vis-à-vis délimitant une incision de largeur moyenne e et de profondeur égale à la hauteur H du plot.

En outre, la paroi latérale de chaque plot et la paroi latérale en vis-à-vis de cette paroi latérale sur la bande de roulement comportent, sur une première partie de l'incision de profondeur P1 au plus égale à 60% de la profondeur H de l'incision, des moyens destinés à limiter les mouvements de la paroi latérale par rapport à la paroi en vis-à-vis, lesdits moyens consistant en des formes géométriques de première amplitude prévues pour s'interconnecter avec ou s'imbriquer dans les formes géométriques prévues sur l'autre paroi en vis-à-vis, et sur une deuxième partie de l'incision, de profondeur P2 au plus égale à 60% de la profondeur H de l'incision et prolongeant la première partie de profondeur P1, des formes géométriques de deuxième amplitude ou rectiligne (c'est-à-dire d'amplitude nulle), la deuxième amplitude étant inférieure à la première amplitude.

De plus, la première partie de l'incision de profondeur P1 délimitant une première partie de plot et la deuxième partie de l'incision de profondeur P2 délimitant une deuxième partie de plot, l'aire de la section maximale de la deuxième partie du plot est supérieure à l'aire de section maximale de la première partie dudit plot. Par section, on entend la trace du plot obtenue sur un plan de coupe coupant ledit plot selon un plan perpendiculaire à l'axe moyen XX' du plot. Par section maximale, on entend la trace du plot qui a une aire maximale pour la partie du plot considérée.

L'axe moyen XX' coupe la surface de roulement de la bande selon une direction perpendiculaire ou bien une direction oblique (c'est-à-dire non perpendiculaire) à ladite surface.

Selon une forme d'exécution de l'invention, les formes géométriques de l'incision délimitée par la paroi latérale de chaque plot et la paroi latérale en vis-à-vis de la bande de roulement, en section droite, ont un tracé en ligne brisée ou en zigzag de forte amplitude sur la première partie d'une profondeur au plus égale à 60% de la hauteur du plot, et celles de la deuxième partie ont un tracé ondulé de faible amplitude et de grande longueur d'onde ou rectiligne sur une profondeur au plus égale à 60% de la hauteur du plot. Pour tout plan de coupe perpendiculaire à la surface de roulement, le segment de droite joignant l'extrémité de l'incision sur la surface de roulement à l'état neuf et le point le plus à l'intérieur de la bande a une inclinaison telle que la surface de la base du plot est supérieure à la surface de contact du plot située à la surface de contact de la bande de roulement.

Chaque incision est définie par l'espace délimité principalement entre deux parois principales en regard l'une de l'autre, lesdites parois étant perpendiculaires à ou obliques par rapport à la surface de roulement. Avantageusement, pour des bandes de roulement destinées à des véhicules poids lourd, la largeur d'une incision délimitant un plot de gomme est inférieure à 2 mm et préférentiellement comprise entre 0.05 mm et 2 mm.

Par axe moyen XX' d'un plot de gomme délimité par une incision fermée, on entend un segment de droite reliant le barycentre géométrique de la base du plot, c'est-à-dire la partie du plot la plus à l'intérieur de la bande, au barycentre géométrique de la surface de contact du plot avec la chaussée ; cette direction fait un angle de 90° avec la surface de roulement quand le plot de gomme est perpendiculaire à cette surface.

Une sculpture de bande de roulement, comportant des incisions délimitant les plots de gomme selon l'invention, outre l'avantage d'avoir une grande longueur d'arêtes actives dans le contact avec le sol, présente l'avantage de repousser significativement le moment où apparaît l'usure irrégulière à la surface de la bande de roulement autour des incisions. Cette invention permet un démoulage efficace et plus facile sans arrachement de gomme de ladite bande du moule après vulcanisation en raison de la limitation significative des forces qui ont tendance à tirer les plots vers l'extérieur de la bande de roulement au moment du démoulage.

Comme il est connu dans la technique, on utilise des éléments moulants pour mouler des incisions dans une bande de roulement. Dans le cas de l'invention, l'élément moulant employé pour mouler ce type d'incision comprend une partie élargie (moulant la deuxième partie de plot) qui autorise, lors de son extraction de la bande, la première partie du plot à reprendre sa place dans la bande de roulement de manière à ce que la face de contact du plot se trouve au plus au même niveau que la surface de roulement (c'est-à-dire que cette face de contact du plot ne se trouve pas en saillie par rapport à cette surface).

La première partie de l'incision comprend des moyens (ligne brisée ou zigzag ou ondulations de forte et première amplitude) permettant durant la première partie de la vie de la bande de roulement de limiter les mouvements dans le sens de la profondeur, par imbrication, de la paroi latérale du plot par rapport à la paroi en vis-à-vis de la gomme de la bande.

L'ensemble de ces caractéristiques prisent en combinaison permet d'éviter que les plots ne restent en saillie par rapport à la surface de la bande de roulement et permet ainsi d'éviter l'arrachement des plots hors de la bande de roulement durant la vie du pneu.

Une sculpture selon l'invention permet en outre un gain en résistance au roulement en raison de la limitation des pertes hystérétiques liées aux déformations cycliques des plots de la bande de roulement.

Selon une variante d'exécution préférentielle, l'amplitude du tracé en ligne brisée de la première partie du plot décroît dans le sens de la profondeur.

Selon une autre variante d'exécution, l'aire de la face de contact du plot augmente de façon continue à partir de la surface de jonction entre la première partie de plot et la deuxième partie de plot. Ainsi, la surface de la section maximale est, sous la surface de jonction, inférieure à la surface de la section minimale de la deuxième partie de l'incision.

Selon une autre variante d'exécution, la surface de contact maximale du plot vu en section droite de la première partie du plot est supérieure à la surface en contact avec la chaussée et avantageusement la surface de contact maximale se trouve au point de jonction de la première avec la deuxième partie du plot.

Selon une autre variante d'exécution, la paroi de la seconde partie du plot est dépourvue de tout moyen interagissant mécaniquement avec la paroi en vis-à-vis sur une profondeur située à une distance de la surface de contact du plot comprise entre 75% et 100% de la hauteur du plot, c'est-à-dire près de la base du plot.

Selon une autre variante d'exécution, la deuxième partie de plot peut éventuellement comprendre des moyens pour interagir mécaniquement avec la paroi en vis-à-vis. Dans ce cas, ces moyens sont choisis pour être d'amplitude inférieure à ceux des moyens prévus sur la première partie afin de ne pas créer de blocage au moment du démoulage pouvant conduire à ce que le plot fasse saillie sur la surface de roulement.

Selon une forme d'exécution préférentielle, chaque incision est terminée dans sa partie radialement la plus à l'intérieur de la bande de roulement, c'est-à-dire à l'extrémité délimitant la base du plot, par une partie élargie formant un canal entourant le plot, ce canal ayant une largeur maximale supérieure à la largeur e de l'incision. La base du plot correspond dans ce cas à la partie la plus à l'intérieur de la bande limitée par ce canal. La présence de ce cordon intervient de façon favorable pour permettre un bon démoulage de la bande de roulement.

Selon une autre forme d'exécution, l'axe moyen XX' du plot est faiblement incliné par rapport à une perpendiculaire à la surface de roulement, c'est-à-dire faisant un angle au plus égal à 10° avec cette perpendiculaire, et préférentiellement incliné selon un angle de 5°.

Pour permettre une meilleure compréhension de l'invention et de ses avantages, il est maintenant décrit plusieurs variantes de réalisation de l'invention au moyen des figures suivantes :

La figure 1A montre un élément d'une bande de roulement et une partie de moule pour mouler un plot de gomme selon l'art antérieur ;

La figure 1B montre l'élément de bande de roulement de la figure 1 avec un plot de gomme faisant saillie sur la surface de roulement après démoulage ;

La figure 2A montre en coupe une partie de bande de roulement comprenant un plot selon une première variante de l'invention ;

La figure 2B représente la surface de roulement de la bande montrée à la figure 1A ;

La figure 3 montre une deuxième variante de plot selon l'invention selon laquelle la forme générale du plot est tronconique ;

La figure 4 montre une troisième variante de plot selon l'invention, selon laquelle la deuxième partie de plot est bi tronconique ;

La figure 5 montre une quatrième variante selon laquelle l'extrémité de l'incision délimitant un plot est formée par un canal entourant le plot ;

La figure 6 montre une cinquième variante selon laquelle la première partie de plot présente une variation décroissante du zigzag de sa paroi vue en coupe ;

La figure 7 montre une sixième variante selon laquelle l'incision délimitant un plot est de forme elliptique.

Pour rendre aisée la lecture des figures et de la description, une même référence est employée dans les figures dès lors qu'elle désigne un même élément fonctionnel et/ou structurel.

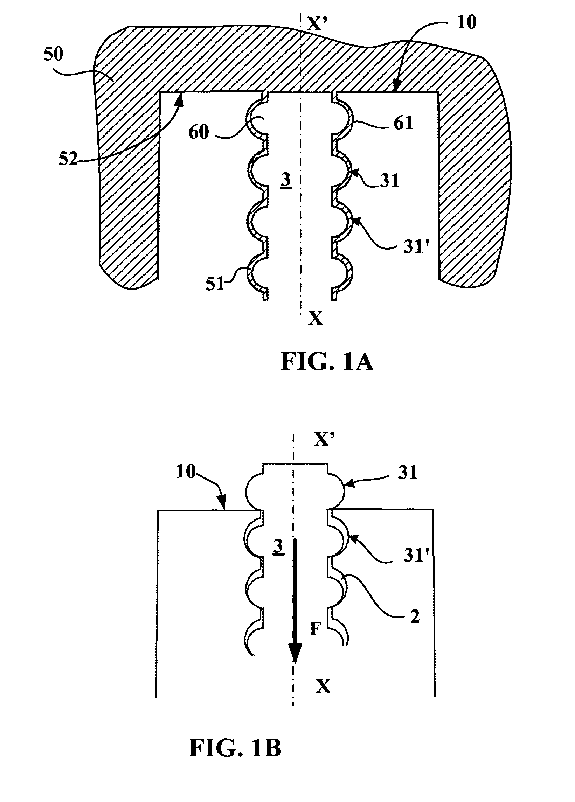

La figure 1A montre un élément 1 d'une bande de roulement selon l'art antérieur, cet élément 1 comprenant une incision 2 fermée délimitant un plot de gomme 3. On montre ici une partie de moule 50 comportant un élément moulant 51 en saillie sur la surface de moulage 52, cet élément moulant étant en place dans la matière composant la bande pour mouler une incision bloquante 2 et délimitant un plot 3 d'axe moyen XX' perpendiculaire à la surface de roulement. Cette incision est dite bloquante car les parois 31 et 31' qui la délimitent comportent des moyens de blocage destinés à interagir en eux de manière à limiter les mouvements relatifs d'une paroi par rapport à l'autre. Les moyens de blocage sont ici des reliefs 61 sur la paroi latérale 31 du plot et des creux 60' sur la paroi 31' en vis-à-vis.

On a constaté que cette configuration n'était pas conservée sur la bande après démoulage et que l'on pouvait obtenir la configuration représentée à la figure 1B. Dans cette configuration, l'élément moulant utilisé pour mouler l'incision et donc les parois du plot et en vis-à-vis, entraînait avec lui le plot 3 pendant le démoulage vers l'extérieur de la surface de roulement 10 de la bande de roulement. Compte tenu de l'élasticité du caoutchouc il existe une force de rappel F qui tend à ramener le plot dans une position correspondant à celle de la figure 1A. Toutefois, à l'équilibre entre les forces de rappel et les forces de blocage générées par les moyens de blocage 61 et 61' eux-mêmes, le plot peut rester partiellement en saillie à l'extérieur de la bande comme cela est visible sur cette figure 1B. Ceci est particulièrement défavorable en aspect visuel et en performance en usure puisqu'il se produit une usure plus prononcée sur les plots en saillie, voire des arrachements de gomme sous certaines conditions de roulage.

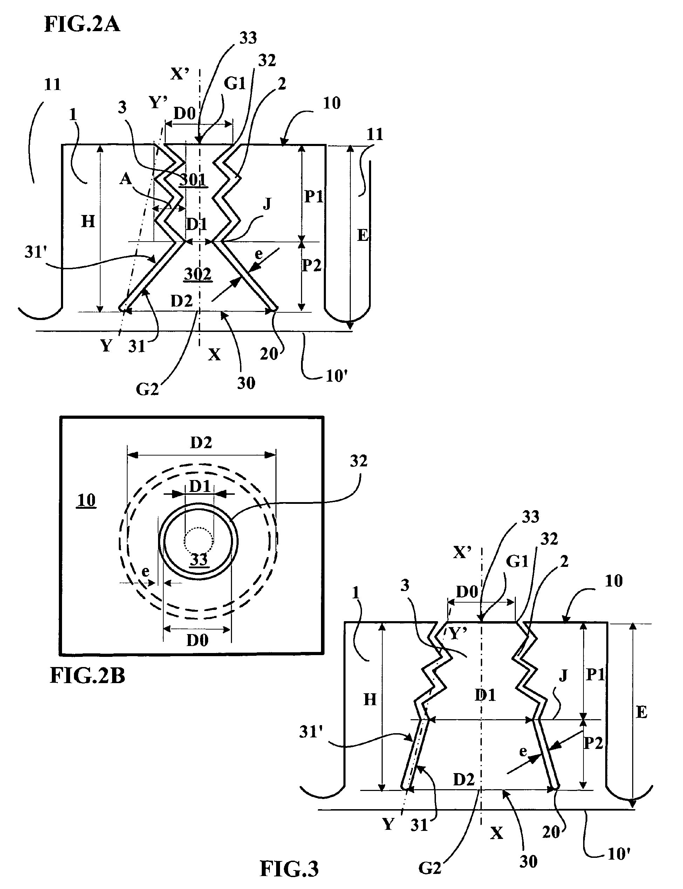

La figure 2A montre en coupe une partie d'une bande de roulement 1 pour pneu de dimension 315/70 R22.5, ladite bande 1 ayant une épaisseur E (ici égale à 17.5 mm) mesurée à l'état neuf comme la distance séparant la surface de roulement 10 destinée à venir en contact avec la chaussée pendant le roulage et une surface intérieure 10' destinée à être appliquée sur la surface radialement à l'extérieur d'une ébauche de pneu. Cette coupe est faite dans un plan contenant l'axe de rotation du pneu.

La bande 1 selon l'invention est pourvue d'une sculpture formée par des rainures 11 et par des incisions. Au moins certaines de ces incisions, sont des incisions 2 dont la trace sur la surface de roulement est de contour fermé. Chacune de ces incisions délimite dans la bande de roulement un plot de gomme 3 comportant une paroi latérale 31 faisant le tour du plot 3. L'incision 2 est de profondeur H au plus égale à l'épaisseur E de la bande, ici égale à 17.5mm. L'intersection de la paroi latérale 31 avec la surface de roulement forme une arête 32 délimitant une face de contact 33 du plot. Chaque plot de gomme 3 comprend une base 30 (partie la plus à l'intérieur de la bande et située à une distance égale à la profondeur de l'incision 2) par laquelle ce plot 3 est relié à la bande 1 et présente un axe moyen XX' coupant la surface de roulement 10 de la bande. Cet axe moyen XX' est une droite fictive passant par les barycentres géométriques G1, G2 de la face de contact 33 du plot 3 et de la base 30 dudit plot.

La paroi latérale 31 de chaque plot 3 est reliée à la base du plot 30 à une paroi en vis-à-vis 31' par une partie de raccordement 20. La paroi latérale 31 du plot 3 et la paroi en vis-à-vis 31' délimitent une incision 2 de largeur moyenne e égale, dans le cas présent, à 0.5 mm. Le plot 3 a une géométrie de révolution autour de l'axe XX' : on entend ici que la géométrie selon tout autre plan de coupe contenant l'axe XX' est sensiblement identique à celle qui est montrée avec cette figure 2A.

Dans le cas présenté, le plot 3 comprend, en partant de la surface de roulement de la bande à l'état neuf, une première partie de plot 301 prolongée par une deuxième partie de plot 302. La première partie de plot 301 est de forme cylindrique d'axe XX' et comprend comme cela est visible sur cette figure 2A un tracé en zigzag destiné à interagir avec un tracé en zigzag complémentaire sur la paroi en vis-à-vis. Les moyens de blocage prévus sur la première partie de l'incision 2 ont une amplitude A non nulle.

Cette première partie de plot comprend une section maximale de diamètre D0 (dans le cas présent D0 est égal à 6 mm) et une section d'aire minimale de diamètre D1. Le diamètre maximal D0 est mesuré sur la surface de roulement tandis que le diamètre minimal D1 (dans le cas présent D1 est égal à 5.4 mm) est mesuré à la profondeur P1 correspondant aux points les plus à l'intérieur de la bande (ici P1 est égale à 60% de H, soit 10.5 mm).

Dans le prolongement de cette première partie, se trouve la deuxième partie de plot 302 qui est de forme générale tronconique et est dépourvue de tout moyen de blocage ou interaction mécanique avec la paroi en vis-à-vis. Cette deuxième partie de plot 302 s'étend à partir de la profondeur P1 jusqu'à la profondeur H (c'est-à-dire sur une profondeur P2 égale à 40% de H, ici égale à 7 mm).

La base 30 du plot 3 est circulaire et a un diamètre D2, (dans le cas présent D2 est égal à 10 mm) qui est supérieur au diamètre maximal D0 de toute section de la première partie de plot 301. Grâce à la forme en tronc de cône, s'élargissant vers l'intérieur, de la deuxième partie de plot 302, les efforts de rappel élastique de la matière caoutchoutique sont suffisants pour remettre en place ce plot à l'intérieur de la bande dans la position voulue et sans que le plot soit en saillie sur la surface de roulement.

Dans des variantes intéressantes, le diamètre D2 de la base 30 du plot est au moins égal à 1,3 fois le diamètre D0 et au plus égal à 2,5 fois le même diamètre D0.

Sur la figure 2B, on montre une vue de la surface de roulement du plot de gomme 3 représenté en coupe à la figure 2A. On distingue la surface de contact 33 du plot de forme circulaire de diamètre D0 ainsi que l'incision 2 de forme générale circulaire et de largeur moyenne e. Le diamètre D1 de la section du plot 3 au niveau du plan de jonction J entre la première partie de plot et la deuxième partie de plot est inférieur au diamètre D0.

Sur la figure 3, on montre une deuxième variante de plot 3 selon laquelle l'incision 2 est portée par une forme générale tronconique de génératrice YY' passant par le point le plus à l'intérieur et le point le plus à l'extérieur. La première partie de plot 301, comporte des moyens pour interagir mécaniquement avec la paroi en vis-à-vis et a un diamètre D0 sur la surface de roulement à l'état neuf et un diamètre maximal D1 au niveau de la jonction J avec la deuxième partie de plot 302. L'angle de cette génératrice YY' avec l'axe moyen XX' du plot est ici de 20°. Les moyens pour interagir mécaniquement avec la paroi en vis-à-vis sont ici des zigzags formés en hélice autour de la première partie de plot.

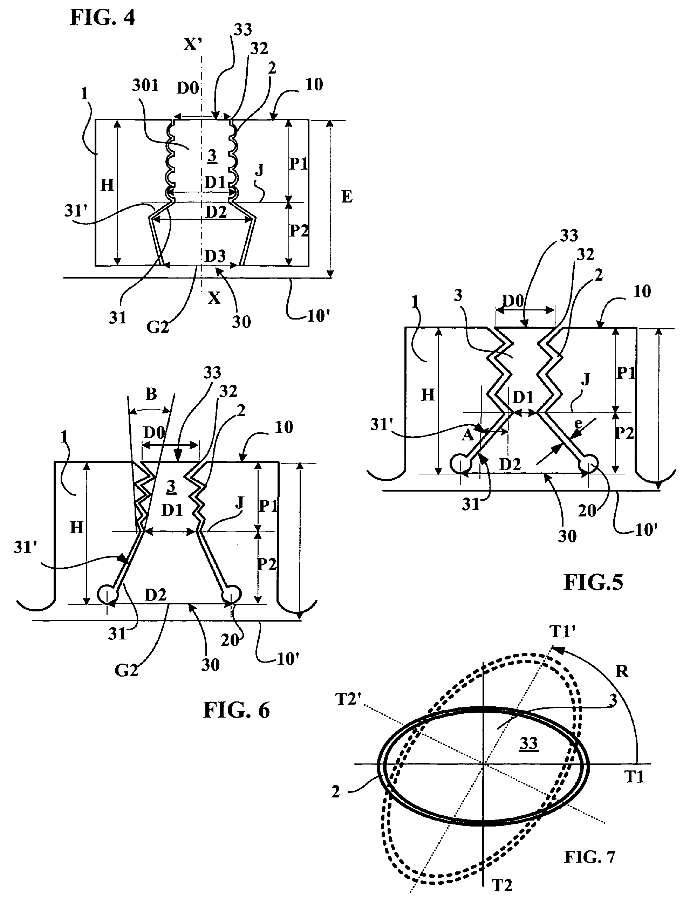

La figure 4 montre une autre variante de plot selon l'invention selon laquelle la première partie de plot est de forme générale cylindrique prolongée par une deuxième partie de plot de forme doublement tronconique. À partir du plan de jonction J entre la première et la deuxième partie de plot, la deuxième partie prend une forme tronconique dont le diamètre de section va en augmentant jusqu'à prendre une valeur maximale D2 (supérieure au diamètre maximal de la première partie de plot) pour ensuite prendre une forme tronconique dont le diamètre va en décroissant vers la base du plot. Dans cette variante, la forme doublement tronconique ne génère pas de blocage du plot en saillie sur la surface de roulement par sa localisation près de la base du plot dès lors que les forces de rappel élastique de la matière sont déterminées pour être suffisantes pour ramener le plot dans la position voulue.

Dans la variante de la figure 5, on reprend le plot montré avec la figure 1 auquel on adjoint un canal entourant la base du plot. Ce canal 20' de dimension maximale de section supérieure à la largeur e de l'incision 2 participe également à un bon démoulage du plot, d'autant qu'il agrandit sensiblement le diamètre de la base du plot. Les moyens de blocage prévus sur la première partie de l'incision 2 ont une amplitude A non nulle tandis que la deuxième partie de l'incision ne comporte pas de moyen de blocage (cette partie étant, vue en coupe, rectiligne).

Dans d'autre variantes non montrées ici, l'axe moyen XX' du plot tel que défini peut faire un angle différent de 0° avec une perpendiculaire à la surface de roulement.

Dans une autre variante montrée avec la figure 6, on cherche plus particulièrement à assurer une transition entre la première partie de plot et la deuxième partie de plot. Dans cette variante, les moyens de blocage des parois du plot de la première partie de plot avec la paroi en vis-à-vis sont formés par des reliefs formant, dans un plan de coupe contenant l'axe XX', une ligne brisée dont l'amplitude décroît en allant vers la surface de jonction ou raccordement avec la deuxième partie de plot (c'est-à-dire en allant vers la base du plot). Dans le cas présent le sommet de l'angle B formé entre deux droites tangentes aux points d'amplitude maximale des lignes brisées est positionné à l'intérieur de la bande.

Dans les variantes précédentes, les tracés géométriques, sur la surface de roulement 10 du pneu neuf, des incisions 2 délimitant des plots de gomme 3 ont une forme circulaire : bien entendu, ce qui a été décrit peut s'appliquer à la mise en oeuvre de formes différentes : ovale, elliptique, rectangulaire ou autres. Pour les formes présentant au moins deux axes de symétrie, il peut être avantageux que l'orientation de ces axes varie en allant de la surface extérieure de la première partie du plot jusqu'à la base de la deuxième partie du plot comme le montre à titre d'exemple la figure 7.

Sur cette figure 7, on montre une vue, sur la surface de roulement à l'état neuf, d'un plot de gomme 3 délimité par une incision 2 et dont la surface de contact 33 a une forme elliptique d'axes principaux T1, T2 (respectivement grand et petit axes). En traits pointillés, on voit la géométrie de la base du plot, elle aussi elliptique et d'axes principaux T1', T2' ; dans le cas présent, on constate que la forme de la base du plot est obtenue par une rotation de la forme du plot sur la surface de roulement. L'angle de rotation de l'axe principal T1' par rapport à l'axe T1 est ici supérieur à 45 degrés. L'axe du plot est ici perpendiculaire à la surface de roulement. Cette variante présente l'avantage d'avoir une orientation de l'incision et donc des arêtes actives sur le sol qui est changeante avec le niveau d'usure de la bande de roulement.

Dans une autre variante non montrée ici, on peut avoir un plot délimité en surface de roulement à l'état neuf par une incision d'une première forme et à sa base d'une autre forme différente de la première. On peut, par exemple, passer d'une forme circulaire à une forme elliptique.

L'invention n'est pas limitée aux exemples décrits et représentés et diverses modifications peuvent y être apportées sans sortir de son cadre. Par exemple et bien que tous les exemples présentés montrent des plots de gomme dont la surface de contact à l'état neuf est au même niveau que la surface de roulement de la bande, il est aisé d'appliquer le même enseignement avec un plot de gomme dont la surface de contact est décalée vers l'intérieur de la bande par rapport à la surface de la bande de roulement. Dans une autre variante, la largeur de l'incision délimitant le plot peut être différente entre les deux parties de plot.

## Revendications

1. - Bande de roulement (1) pour pneu ayant une épaisseur (E) et pourvue d'une surface de roulement (10) destinée à venir en contact avec la chaussée pendant le roulage, cette bande de roulement (1) comportant une pluralité de plots de gomme (3) d'axe moyen XX' coupant la surface de roulement (10) de la bande, chaque plot de gomme (3), ayant une hauteur H au plus égale à l'épaisseur (E) de la bande, comprenant une paroi latérale (31) faisant le tour dudit plot autour de l'axe XX', cette paroi latérale (31) coupant la surface de roulement (10) selon une arête (32) dont le tracé géométrique sur la surface de roulement (10) est fermé, cette arête (32) délimitant une face de contact (33) du plot avec la chaussée, la paroi latérale (31) de chaque plot étant, à sa base (30), reliée par une partie de raccordement (20) à une paroi (31') en vis-à-vis, la paroi latérale (31) du plot et la paroi (31') en vis-à-vis délimitant une incision (2) de largeur moyenne (e) et de hauteur (H), la bande étant **caractérisée en ce que** :
la paroi latérale (31) de chaque plot et la paroi latérale (31') en vis-à-vis de cette paroi latérale (31) présentent,
• sur une première partie de l'incision de profondeur (P1) au plus égale à 60% de la profondeur (H) de l'incision (2), des moyens de blocage destinés à limiter les mouvements de la paroi latérale (31) par rapport à la paroi (31') en vis-à-vis, lesdits moyens consistant en des formes géométriques de première amplitude prévues sur une paroi pour s'interconnecter avec ou s'imbriquer dans les formes géométriques prévues sur la paroi en vis-à-vis,
• et sur une deuxième partie de l'incision, de profondeur (P2) au plus égale à 60% de la profondeur (H) de l'incision et prolongeant la première partie de profondeur (P1), des formes géométriques de deuxième amplitude ou rectiligne (c'est-à-dire d'amplitude nulle), la deuxième amplitude étant inférieure à la première amplitude,
et **en ce que**, la première partie de l'incision délimitant une première partie de plot (301) et la deuxième partie de l'incision délimitant une deuxième partie de plot (302), la surface de section maximale de la deuxième partie du plot (302) est supérieure à la surface de section maximale de la première partie dudit plot (301).

2. - Bande de roulement selon la revendication 1, **caractérisée en ce que** la surface de section à la base du plot est supérieure à la surface de section du plot au raccordement entre première et deuxième parties dudit plot, et **en ce que** la section de la deuxième partie du plot augmente de manière linéaire entre ledit raccordement et la base du plot.

3. - Bande de roulement selon la revendication 2 **caractérisée en ce que** la première partie de plot (301) est de forme générale cylindrique circulaire et la deuxième partie de plot (302) est de forme générale tronconique, cette deuxième partie de plot allant en s'élargissant en allant vers la base du plot (3).

4. - Bande de roulement selon l'une des revendications 1 à 3 **caractérisée en ce que** les moyens de blocage des parois du plot de la première partie de plot avec la paroi en vis-à-vis sont formés par des reliefs formant, dans un plan de coupe contenant l'axe XX', une ligne brisée dont l'amplitude décroît en allant vers la base du plot.

5. - Bande de roulement selon l'une des revendications 1 à 4 **caractérisée en ce que** la paroi (31) délimitant la deuxième partie de plot (302) est dépourvue de tout moyen de blocage avec la paroi en vis-à-vis.

6. - Bande de roulement selon l'une des revendications 3 à 5 **caractérisée en ce que** le rapport du diamètre (D2) de la base du plot (3) au diamètre du plot D0 sur la surface de roulement à l'état neuf est au moins égal à 1,3 et au plus égal à 2,5.

7. - Bande de roulement selon l'une des revendications 1 à 6 **caractérisée en ce que** l'extrémité de l'incision (2) dans sa partie la plus à l'intérieur de la bande de roulement comporte une partie formant un canal (20') entourant le plot (3) de largeur supérieure à la largeur e de l'incision.

8. - Bande de roulement selon l'une des revendications 1 ou 2 **caractérisée en ce que** la forme de l'incision délimitant un plot en surface est elliptique d'axes principaux T1, T2 et que la base du même plot est de forme elliptique d'axes principaux T1', T2', l'axe principal T1' faisant un angle différent de 0 degré avec l'axe principal T1.

9. - Bande de roulement selon l'une des revendications 1 à 8 **caractérisée en ce que** l'axe XX' du plot est incliné d'un angle différent de 90 degrés avec une perpendiculaire à la surface de roulement.

## Claims

1. Tyre tread (1) having a thickness (E) and provided with a rolling surface (10) designed to come into contact with the road surface during running, this tread (1) comprising a plurality of rubber pads (3) with a median axis XX' cutting the rolling surface (10) of the tread, each rubber pad (3) having a height H at most equal to the thickness (E) of the tread, comprising a lateral wall (31) running around the said pad about the axis XX', this lateral wall (31) cutting the rolling surface (10) along a ridge (32) the geometric path of which on the rolling surface (10) is closed, this ridge (32) delimiting a face (33) of contact of the pad with the road surface, the lateral wall (31) of each pad being, at its base (30), connected by a connection portion (20) for connection to a wall (31') facing it, the lateral wall (31) of the pad and the wall (31') facing it delimiting an incision (2) with an average width (e) and with a height (H), the tread being **characterized in that**:
the lateral wall (31) of each pad and the lateral wall (31') facing this lateral wall (31) have,
• on a first portion of the incision, of a depth (P1) at most equal to 60% of the depth (H) of the incision (2), blocking means designed to limit the movements of the lateral wall (31) relative to the wall (31') facing it, the said means consisting of geometric shapes of first amplitude provided on a wall in order to interconnect with or fit into the geometric shapes provided on the wall facing it,
• and on a second portion of the incision, of a depth (P2) at most equal to 60% of the depth (H) of the incision and extending the first portion of depth (P1), geometric shapes of second amplitude or that are rectilinear (that is to say of zero amplitude), the second amplitude being less than the first amplitude,
and **in that** the first portion of the incision delimiting a first portion of pad (301) and the second portion of the incision delimiting a second portion of pad (302), the maximum sectional surface area of the second portion of the pad (302) is greater than the maximum sectional surface area of the first portion of the said pad (301).

2. Tread according to Claim 1, **characterized in that** the sectional surface area at the base of the pad is greater than the sectional surface area of the pad at the connection between the first and second portions of the said pad, and **in that** the section of the second portion of the pad increases linearly between the said connection and the base of the pad.

3. Tread according to Claim 2, **characterized in that** the first portion of pad (301) is of generally circular cylindrical shape and the second portion of pad (302) is of generally frustoconical shape, this second portion of pad widening towards the base of the pad (3).

4. Tread according to one of Claims 1 to 3, **characterized in that** the means for locking the walls of the pad of the first portion of pad with the wall facing it are formed by reliefs forming, in a sectional plane containing the axis XX', a broken line the amplitude of which decreases towards the base of the pad.

5. Tread according to one of Claims 1 to 4, **characterized in that** the wall (31) delimiting the second portion of pad (302) is deprived of any means of blocking with the wall facing it.

6. Tread according to one of Claims 3 to 5, **characterized in that** the ratio of the diameter (D2) of the base of the pad (3) to the diameter (D0) of the pad on the rolling surface in the new state is at least equal to 1.3 and at most equal to 2.5.

7. Tread according to one of Claims 1 to 6, **characterized in that** the end of the incision (2) in its innermost portion of the tread comprises a portion forming a channel (20') surrounding the pad (3) of a width greater than the width e of the incision.

8. Tread according to one of Claims 1 or 2, **characterized in that** the shape of the incision delimiting a pad of the surface is elliptical with main axes T1, T2 and that the base of the same pad has an elliptical shape with main axes T1', T2', the main axis T1' forming an angle other than 0 degrees with the main axis T1.

9. Tread according to one of Claims 1 to 8, **characterized in that** the axis XX' of the pad is inclined at an angle other than 90 degrees with a perpendicular to the rolling surface.

## Patentansprüche

1. Laufstreifen (1) für einen Reifen, der eine Dicke (E) hat und mit einer Lauffläche (10) versehen ist, die dazu bestimmt ist, während des Rollens mit der Fahrbahn in Kontakt zu kommen, wobei dieser Laufstreifen (1) eine Vielzahl von Gummiblöcken (3) mit einer Mittelachse XX' aufweist, die die Lauffläche (10) des Streifens schneidet, wobei jeder Gummiblock (3), der eine Höhe H höchstens gleich der Dicke (E) des Streifens hat, eine Seitenwand (31) enthält, die um den Block um die Achse XX' herum geht, wobei diese Seitenwand (31) die Lauffläche (10) gemäß einer Kante (32) schneidet, deren geometrischer Verlauf auf der Lauffläche (10) geschlossen ist, wobei diese Kante (32) eine Kontaktseite (33) des Blocks mit der Fahrbahn begrenzt, wobei die Seitenwand (31) jedes Blocks an ihrer Basis (30) durch einen Anschlussbereich (20) mit einer gegenüberliegenden Wand (31') verbunden ist, wobei die Seitenwand (31) des Blocks und die gegenüberliegende Wand (31') einen Einschnitt (2) mittlerer Breite (e) und einer Höhe (H) begrenzen, wobei der Streifen **dadurch gekennzeichnet ist, dass**:
die Seitenwand (31) jedes Blocks und die dieser Seitenwand (31) gegenüberliegende Seitenwand (31') aufweisen
• in einem ersten Bereich des Einschnitts einer Tiefe (P1) höchstens gleich 60% der Tiefe (H) des Einschnitts (2), Blockiereinrichtungen, die dazu bestimmt sind, die Bewegungen der Seitenwand (31) bezüglich der gegenüberliegenden Wand (31') zu begrenzen, wobei die Einrichtungen aus geometrischen Formen einer ersten Amplitude bestehen, die auf einer Wand vorgesehen sind, um sich mit den auf der gegenüberliegenden Wand vorgesehenen geometrischen Formen zu verbinden oder ineinanderzuschieben,
• und in einem zweiten Bereich des Einschnitts einer Tiefe (P2) höchstens gleich 60% der Tiefe (H) des Einschnitts und den ersten Bereich der Tiefe (P1) verlängernd, geometrische Formen einer zweiten Amplitude oder geradlinig (d.h. mit einer Amplitude Null), wobei die zweite Amplitude niedriger ist als die erste Amplitude,
und dass, indem der erste Bereich des Einschnitts einen ersten Blockbereich (301) begrenzt und der zweite Bereich des Einschnitts einen zweiten Blockbereich (302) begrenzt, die Fläche maximalen Querschnitts des zweiten Bereichs des Blocks (302) größer als die Fläche maximalen Querschnitts des ersten Bereichs des Blocks (301) ist.

2. Laufstreifen nach Anspruch 1, **dadurch gekennzeichnet, dass** die Querschnittsfläche an der Basis des Blocks größer als die Querschnittsfläche des Blocks am Anschluss zwischen dem ersten und dem zweiten Bereich des Blocks ist, und dass der Querschnitt des zweiten Bereichs des Blocks zwischen dem Anschluss und der Basis des Blocks linear zunimmt.

3. Laufstreifen nach Anspruch 2, **dadurch gekennzeichnet, dass** der erste Blockbereich (301) eine allgemein kreisförmige zylindrische Form hat, und dass der zweite Blockbereich (302) eine allgemeine Kegelstumpfform hat, wobei dieser zweite Blockbereich sich in Richtung der Basis des Blocks (3) ausweitet.

4. Laufstreifen nach einem der Ansprüche 1 bis 3, **dadurch gekennzeichnet, dass** die Blockiereinrichtungen der Wände des Block des ersten Blockbereichs mit der gegenüberliegenden Wand von Reliefs gebildet werden, die in einer die Achse XX' enthaltenden Schnittebene eine gebrochene Linie bilden, deren Amplitude in Richtung der Basis des Blocks abnimmt.

5. Laufstreifen nach einem der Ansprüche 1 bis 4, **dadurch gekennzeichnet, dass** die den zweiten Bereich des Blocks (302) begrenzende Wand (31) keine Blockiereinrichtung mit der gegenüberliegenden Wand aufweist.

6. Laufstreifen nach einem der Ansprüche 3 bis 5, **dadurch gekennzeichnet, dass** das Verhältnis des Durchmessers (D2) der Basis des Blocks (3) zum Durchmesser des Blocks D0 an der Lauffläche im Neuzustand mindestens gleich 1,3 und höchstens gleich 2,5 ist.

7. Laufstreifen nach einem der Ansprüche 1 bis 6, **dadurch gekennzeichnet, dass** das Ende des Einschnitts (2) in seinem am weitesten innen im Laufstreifen liegenden Bereich einen den Block (3) umgebenden, einen Kanal (20') bildenden Bereich mit einer größeren Breite als die Breite e des Einschnitts aufweist.

8. Laufstreifen nach einem der Ansprüche 1 oder 2, **dadurch gekennzeichnet, dass** die Form des einen Block an der Oberfläche begrenzenden Einschnitts elliptisch mit Hauptachsen T1, T2 ist, und dass die Basis des gleichen Blocks von elliptischer Form mit Hauptachsen T1', T2' ist, wobei die Hauptachse T1' einen Winkel ungleich 0 Grad mit der Hauptachse T1 bildet.

9. Laufstreifen nach einem der Ansprüche 1 bis 8, **dadurch gekennzeichnet, dass** die Achse XX' des Blocks um einen von 90 Grad verschiedenen Winkel zu einer Lotrechten zur Lauffläche geneigt ist.
